# FASCICULE DE BREVET EUROPEEN

(11) **EP 1 200 361 B1**
(45) Date de publication et mention de la délivrance du brevet: **31.03.2004**
(21) Numéro de dépôt: 00967948.1
(22) Date de dépôt: 04.10.2000
(51) Int. Cl.: C02F 3/04, C02F 3/32

(54) **PROCEDE D'EPURATION DES EFFLUENTS URBAINS, AGRICOLES OU INDUSTRIELS**
VERFAHREN ZUR REINIGUNG VON STÄDTISCHEN, LANDWIRTSCHAFTLICHEN UND/ODER INDUSTRIELLEN ABWÄSSERN
METHOD FOR PURIFYING DOMESTIC, AGRICULTURAL AND INDUSTRIAL WASTEWATER

(30) Priorité: 08.10.1999 FR 9912855
(43) Date de publication de la demande: 02.05.2002
(73) Titulaire: Mongin, Pierre, 37390 Cerelles (FR); Mongin-Ganster, Jacqueline, 37390 Cerelles (FR); Mongin, Stéphane, 37000 Tours (FR)
(72) Inventeur: Mongin, Pierre, 37390 Cerelles (FR); Mongin-Ganster, Jacqueline, 37390 Cerelles (FR); Mongin, Stéphane, 37000 Tours (FR)
(86) Numéro de dépôt international: PCT/FR2000/002761
(87) Numéro de publication internationale: WO 2001/027039

(56) Documents cités:
- WO-A-99/32406
- DE-A- 4 332 234
- US-A- 4 793 929

## Description

### I. Les attendus

Le traitement des eaux usées est posé comme impératif par la plupart des législations. Par ailleurs, les autorités, telles que les « Agences de bassin » en France, recommandent aujourd'hui d'utiliser des procédés qui limitent les transferts des effluents vers des unités de plus en plus grosses et qui fonctionnent de la manière la plus autonome possible. avec le minimum d'interventions. Il est aussi souhaitable d'utiliser des procédés qui ne nécessitent que des investissements réduits. La présente invention répond à tous ces impératifs.

Les systèmes disponibles actuellement, même s'ils satisfont le cas échéant, à certains de ces impératifs présentent le uns et les autres divers inconvénients. En premier lieu leur coût; notamment de fonctionnement, les rend la plupart du temps inaptes au traitement des eaux usées de petites unités; pour cette raison le « marché » des unités de moins de 1.500 à 2.000 équivalents habitants est laissé de côté par les grandes entreprises opérant dans l'épuration des eaux.

De plus certains systèmes rustiques, qui pourraient être adaptés à cette cible technique, présentent divers inconvénients. Le lagunage, par exemple, exige de grandes superficies de l'ordre de 10 à 12 mètres carrés par habitant dans le cas des effluents urbains ; l'emprise au sol pour un village de 500 habitants est ainsi voisine de 1 hectare. Par ailleurs ces mêmes systèmes sont fortement odorants et doivent donc être installés à distance du village ce qui nécessite un investissement supplémentaire en canalisations pour lesquelles les subventions sont moitié moindre que celles accordées à la station proprement dite.

Souvent aussi les systèmes de ce type; fondés sur des « lits filtrants », comme le procédé décrit dans le présent brevet, présentent, par rapport à lui, l'inconvénient majeur de colmater fréquemment exigeant un travail mécanique et un remplacement relativement fréquent des couches de surface.

De manière plus générale, les unités de traitement détériorent souvent le paysage, que ce soit par l'implantation d'éléments en béton ou de machines tournantes, ou par des marais qui n'ont rien à voir avec le paysage naturel du lieu.

Par ailleurs il faut souvent faire subir à l'effluent brut un traitement préalable et coûteux avant de pouvoir l'admettre dans l'unité d'épuration. De plus, à l'autre extrémité des procès d'épuration, on trouve souvent des boues qu'il faut manipuler et traiter, par exemple par une déshydratation, mais qui, de plus, trouvent de moins en moins de débouchés et/ou de lieux de stockage. Enfin, les conserveurs de légumes exigent, par voie contractuelle, que les terres de culture n'aient jamais reçu de boue d'épuration. Si on doit les incinérer, outre le coût de cette opération, on sait aujourd'hui le problème posé par l'émission de gaz nocifs comme la dioxine.

Par ailleurs encore, l'utilisation de dispositif mécanique ou électronique de régulation rend les installations très complexes avec un coût de maintenance important. Celle-ci doit, en effet, être confiée à des professionnels, et son coût représente souvent 8 % à 10 % de l'investissement, ce qui obère lourdement le budget de petites communes ou de PME. Nombre de communes refusent en effet de connecter à leur unité d'épuration certaines PME qui se trouvent ainsi dans l'obligation, d'épurer elles-mêmes un volume d'effluent aussi réduit.

Par ailleurs encore, les autres systèmes manquent souvent de souplesse face à d'éventuelles variations importantes du volume d'effluent à traiter.

Le système décrit ci-dessous pallie tous ces inconvénients. Il est naturel, de petite taille et adapté à de petits volumes, mais souple, rustique et de très faible coût de maintenance. Il ne colmate pas et étant aérobie, il n'est pas odorant.

Ce système est une unité de traitement d'effluents liquides urbains, agricoles, ou industriels, combinant les moyens connus que sont les lits filtrants et les lits à macrophytes, mais avec des innovations dans la combinaison et des adjuvants tels que, les caractéristiques décrites ci-dessus, peuvent être atteintes avec des coûts d'investissement et de maintenance particulièrement réduits.

### II. Le procédé

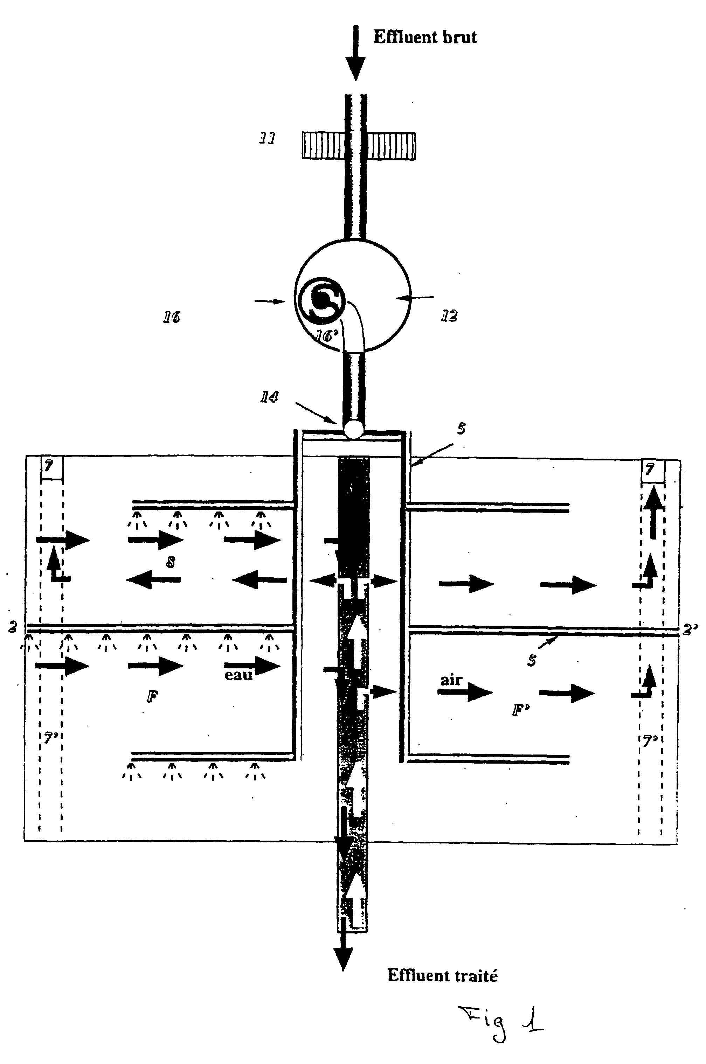

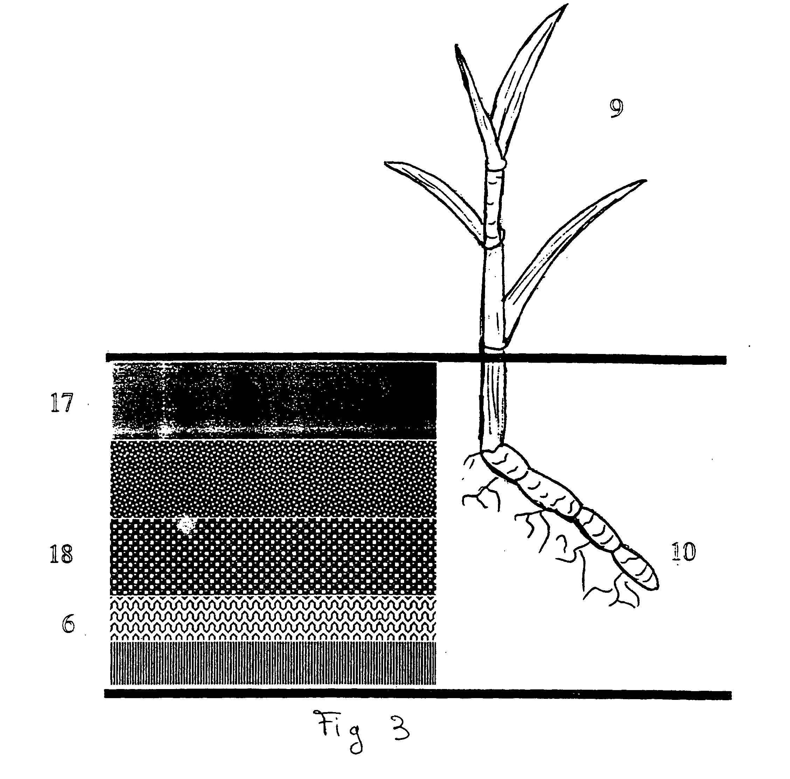

L'unité de base du système, dont la description est faite en référence aux figures 1/3 (vue en plan), 2/3 (vue en coupe) et 3/3, est constituée d'un bassin étanche et enterré, environ deux fois plus long que large, recouvert sur toute sa surface d'un film en chlorure de polyvinyle (15), une paroi verticale (1) séparant ce bassin en deux parties égales (2) et (2'), qui sont utilisées alternativement chaque semaine. Un canal collecteur central (3) permet d'évacuer les eaux épurées. L'ensemble est rempli de granulats (4) à travers lesquels les fluides à épurer percolent verticalement. Un dispositif d'aspersion (5) répand l'effluent sur toute la surface du bassin.

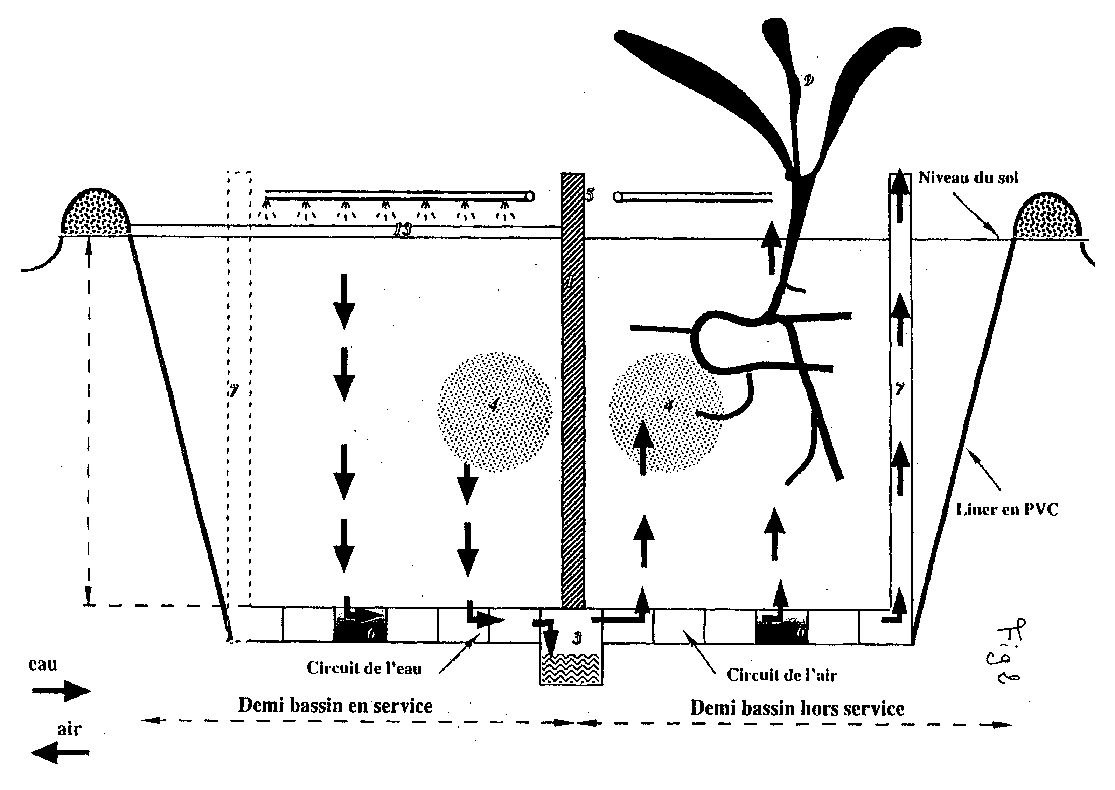

Un dispositif 6 formé de blocs parallélépipédiques, alvéolés, en polychlorure de vinyle, tapissant le fond, remplit deux fonctions. Il recueille l'eau qui percole verticalement et en retour oxygène les granulats situés au-dessus de lui. C'est la forme des alvéoles, moyen connu et breveté par ailleurs, qui permet cette double fonction. L'eau circule dans les bassins, selon les flèches continues (F) indiquées dans le demi-bassin (2) dans la figure 2/3 pour les mouvements verticaux et dans la figure 1/3 pour la circulation horizontale.

Par ailleurs l'air circule selon les flèches grisées (F') indiquées dans le demi-bassin (2') dans les vues 1/3 et 2/3 ; cette circulation étant assurée par deux cheminées verticales latérales (7) et des canaux d'aspiration horizontaux (7') sur la coupe A ménagés dans le granulat. On a donc bien ainsi deux circulations opposées d'air et d'eau. La circulation d'air sous toute la surface du bassin approvisionne en oxygène tout le massif de granulat et assure la vie des bactéries aérobies qui réalisent l'épuration. A l'inverse des systèmes, marécageux aucune méthanisation n'est possible en profondeur car le sol « reconstitué » n'est ni en état hydromorphe, ni en anaérobiose.

L'effluent à épurer passe à travers un dégrilleur (11), qui retient les éventuels objets et matières volumineux (bouteilles, morceaux de matière plastique, cailloux...), puis est reçu dans un bassin de rétention (12). Une pompe à bâchée (16), asservie à un flotteur (16'), envoie l'effluent par bâchées de quelques mètres cubes sur toute la surface du demi-bassin en service (le bassin (2) dans la figure 1/3), à travers le dispositif d'aspersion (5). L'alimentation en bâchée permet de créer une lame d'eau (13) sur toute la surface du demi bassin en service. Une vanne manuelle à trois voies (14) dirige alternativement l'effluent sur l'un des demi-bassins.(2) et (2').

Les lits de percolation sont composés de sables et graviers de taille croissante de haut en bas, selon le sens de percolation. On choisit les types de granulats (tailles de 0-2 à 16-32 m/m) leur nature chimique, l'épaisseur des couches successives et le gradient de leur taille en fonction du type d'effluent à traiter.
Ainsi (A), avec un effluent routier, peu chargé en DCO¹ mais riche en ammoniaque, l'épaisseur de sable (17) 0-2 m/m sera importante et la taille des granulats sous-jacents sera réduite et en matériaux calcaires. Le traitement global se faisant sur un seul étage (voir figure 3/3).

¹ DCO : Demande chimique en oxygène

Le sable (17, figure 3/3) mis en surface est composé de grains d'un diamètre compris entre 0 et 2 m/m ; il est siliceux, dépourvu de « fines » et préalablement lavé afin d'éviter le colmatage et la prise en masse. Le granulat le plus en profondeur (18) est calcaire afin d'alcaliniser le pH et de faciliter la nitrification.

Le cas échéant on peut, selon les contraintes, faire passer l'effluent successivement dans deux bassins, ainsi mis en série. Dans ce cas la granulométrie moyenne est évidemment plus élevée dans le premier bassin que dans le second.
Ainsi (B), avec un effluent urbain chargé en DCO de type hôtelier, ou lorsque les caractéristiques qualitatives de sortie sont supérieures à la normale, le traitement se fera en deux étages successifs le premier n'aura pas de sable en surface mais déjà des granulats 2-6 ou 3-8 (18) pour traiter la DCO mais sans trop retenir de MES² ; le second étage, dit de finition, aura par contre une couche de sable plus importante et un gradient des granulométries sous-jacentes plus faible (voir figure 3/3).

² MES : Matières en suspension

La surface du bassin est plantée de roseaux, *Phragmitis australis* (9), qui ont à la fois (figure 3/3) :
- un effet de déshydratation des boues par évapotranspiration,
- un effet de floculation des matières organiques dissoutes
- un effet mécanique de décolmatage par les rhizomes (10),
- un effet d'oxygénation et de contrôle de la microflore dans le massif.

Ces roseaux (9) assurent l'oxygénation de l'effluent en surface et sous la lame (13); cette oxygénation est complétée par la mise à sec alternative de deux demi-bassins 2 et 2'.

La pompe à bâchée (16), permet à la fois d'utiliser toute la surface du bassin, donc de réduire la surface nécessaire au traitement d'un volume donné d'effluent et aussi de rendre la pousse des roseaux (9) homogène et isotrope ce qui limite considérablement la poussée de plantes adventices.

L'aspersion par pompe à bâchée (16) et asperseur (5), en assurant une bonne répartition de l'effluent, évite la création fréquente dans les dispositifs analogues, de « canaux préférentiels » qui permettent à certains volumes d'effluent de s'écouler sans être traités; le système assure une homogénéité de l'épuration.

L'activité bactérienne, donc la capacité épuratoire du milieu de percolation, est fonction de la teneur en eau du dit milieu ; un sol trop sec ou un sol hydromorphe ne sont pas favorables aux bactéries ; seule une hydratation moyenne l'est. C'est ce que permet cette mise hors d'eau alternative des deux demi-bassins 2 et 2'.

Contrairement aux autres systèmes qui génèrent de véritables boues qu'il faut fréquemment enlever et traiter, le système décrit ne génère pas de boues mais un véritable « sol ». Une grande partie des matières organiques est biodégradée in situ, la phase insoluble, retenue en surface étant déshydratée par les roseaux (9) par évapotranspiration, transformée en humus, comme dans un sol ordinaire, et, pour partie. minéralisée, également comme dans un sol. Le résidu organique et minéral inévitable qui reste en surface ne doit être évacué que tous les 4 à 6 ans en moyenne. Ce résidu possède, par ailleurs, d'excellentes qualités d'amendement agronomique, et, comme il a peu d'humidité, il peut être aisément évacué par tractopelle et remorque.

Au plan sanitaire, les qualités d'adsorption des virus par les granulats, combinées à une inactivation de ces derniers durant la phase d'assèchement et à leur élution lors de la remise en eau, permettent une décontamination partielle des effluents.

La combinaison de l'utilisation des roseaux (9) et de leurs rhizomes (10), ou de tout autre végétal adéquat, du fonctionnement alternatif des deux demi-bassins 2 et 2', et du choix de granulats en fonction des caractéristiques des effluents à traiter, élimine le colmatage qui est le défaut principal des systèmes de traitement usuels de cette catégorie et ne nécessite qu'un mètre carré environ par équivalent habitant.

L'utilisation des roseaux a aussi pour avantage d'éviter le phénomène fréquent de la formation en surface de « parchemins » résultant de la présence dans les effluents de papier à base de cellulose.

Contrairement à ce qui se passe avec les autres procédés, la surveillance du fonctionnement de l'unité d'épuration ainsi décrite peut être assurée par le personnel déjà en place dans la municipalité ou l'entreprise. Aucun geste technique ne nécessite une formation initiale ; ce sont le dégrillage, l'alternance des demi-bassins chaque semaine, ainsi que l'entretien des abords. Le coût de fonctionnement n'est constitué que de la fourniture d'électricité pour la pompe. L'entretien lourd, tous les quatre ou six ans, peut être effectué par une entreprise de travaux publics locale ou un agriculteur, disposant d'un tractopelle. Le curage est fait en moins d'une journée et par demi-bassin il n'impose pas l'arrêt de la station.

## Revendications

1. Procédé d'épuration des effluents urbains, agricoles ou industriels **caractérisé par** la combinaison
- d'une percolation verticale de l'effluent à traiter. à travers des lits superposés de sable et graviers,
- d'une circulation continue d'air en partie basse, assurant continuellement le caractère aérobie du procédé,
- et d'une plantation, en zone haute, de plantes aquatiques notamment *Phragmitis australis*.

2. Procédé, selon revendication 1, **caractérisé par le fait que** la circulation d'air en partie basse **occupe toute la surface** du bassin et est obtenue par **deux cheminées latérales** verticales débouchant chacune sur un **canal d'aspiration** horizontal.

3. Procédé, selon revendication 1, **caractérisé par l'usage de tout autre végétal ayant des caractéristiques** de même type que celles de *Phragmitis australis* : absorption de l'eau par les racines et élimination de cette eau par évapotranspiration, sécrétions racinaires favorisant la floculation des matières organiques, mouvements mécaniques du rhizome, transport de l'oxygène des feuilles vers les racines etc.

4. Procédé, selon revendication 1, **caractérisé par le fait que** le bassin, unité de base, est subdivisé en deux demi-bassins **arrosés sur toute la surface et, utitisés alternativement** pour assurer en permanence une hydratation et une aération optimale du sol pour le fonctionnement des bactéries.

5. Procédé, selon revendication 1, **caractérisé par le fait que** les granulats, au travers desquels l'effluent percole, sont de **taille croissante du haut vers le bas** allant de 0-2 m/m à 16-32 m/m, de composition et de taille variables selon l'effluent à traiter et les caractéristiques exigées du rejet.

6. Procédé, selon revendications 1-2-3-4-5, **caractérisé par le fait qu'**en raison de son efficacité, la combinaison nouvelle **ne nécessite qu'un mètre carré** de surface utile par équivalent habitant pour traiter un effluent urbain standard.

7. Procédé, selon revendications 1 et 4, **caractérisé en ce que** le fonctionnement alternatif par demi-bassin **évite l'arrêt même momentané de la station** soit pour des raisons d'entretien soit pour des raisons accidentelles.

8. Procédé selon revendications 1 et 3, **caractérisé par la distribution par bâchée et à l'aide d'un répartiteur-asperseur** de l'effluent à traiter sur toute la surface du demi-bassin en fonctionnement.

## Claims

1. A domestic, agricultural or industrial processing **characterized by** the combination of
- a vertical percolation of the waste which needs treatment, through superposed beds made up of sand and gravels,
- a continuous circulation of air in the lower part, ensuring the aerobic nature of the process,
- and the planting, in the upper part, of aquatic plants, particularly *Phragmitis australis*.

2. A process - according to claim 1 - **characterized by** the fact that the circulation of air in the lower part takes up the whole surface of the basin and is made possible by two lateral vertical chimneys each connected to the horizontal pipes used to pump in the air.

3. A process - according to claim 1 - **characterized by** the use of any other plant with characteristics similar to those of *Phragmitis austratis* : water absorption through the roots and elimination of that water via evapotranspiration, root secretions which favour flocculation of organic matters, mechanical movements of the rhizome, channelling of the oxygen from the leaves down to the roots, etc.

4. A process - according to claim 1 - **characterized by** the fact that the basin, which is the basic unit, is divided up into two parts whose whole surface is watered and which are used alternately to constantly ensure an optimal hydration and aeration of the soil necessary for the bacteria to do their work.

5. A process - according to claim 1 - **characterized by** the fact that the size of the granulates through which the waste percolates increases from top to bottom, ranging from 0-2 mm to 16-32 mm and that their make-up and size depend on the type of waste which needs processing and what is required of the waste discharged at the end of the process.

6. A process - according to claims 1-2-3-4-5 - **characterized by** the fact that, owing to its efficiency, the new combination only necessitates a surface of one square-meter per inhabitant to process standard domestic waste.

7. A process - according to claims 1 and 4 - **characterized by** the fact that using two half-basins alternately means the processing plant need not be halted, even momentarily, whether for maintenance purposes or accidental reasons.

8. A process - according to claims 1 and 3 - **characterized by** the distribution of the waste needing processing over the whole surface of the half-basin in use by releasing the water suddenly and a repartition-cum-aspersion device.

## Patentansprüche

1. Verfahren zur Reinigung von städtischen, landwirtschaftlichen und/oder industriellen Abwässern durch Kombination
- einer senkrechten Versickerung der Abwässer durch Sand- und Kieselschichten,
- einer kontinuierlichen Luftzirkulation im unteren Bereich, die den aeroben Charakter des Verfahrens kontinuierlich gewährleistet,
- und einer Bepflanzung im oberen Bereich mit Wasserpflanzen, vor allem mit der Art *Phragmitis australis*.

2. Verfahren, gemäß Patentanspruch 1, das durch die Tatsache charakterisiert wird, dass die Luftzirkulation im unteren Bereich **die ganze Fläche des Beckens in Anspruch nimmt** und durch **zwei senkrechte Belüftungsschächte** gewährleistet wird, die jeweils zu einem horizontalen **Absaugkanal** führen.

3. Verfahren, gemäß Patentanspruch 1, das durch den **Gebrauch von allen anderen Pflanzen** charakterisiert wird, **deren Merkmale mit denen von *Phragmitis australis* übereinstimmen:** die Absorption des Wassers durch die Wurzeln und Ausscheidung dieses Wassers durch Evapotranspiration, die Ausscheidungen der Wurzeln, welche die Ausflockung der organischen Stoffe unterstützt, die mechanischen Bewegungen des Rhizoms, der Sauerstofftransport von den Blättern zu den Wurzeln, usw.

4. Verfahren, gemäß Patentanspruch 1, das durch die Tatsache charakterisiert wird, dass das Becken, die Grundeinheit, aus zwei halben Becken besteht, die **auf der ganzen Fläche bewässert** und **abwechselnd benutzt** werden, um eine ständige Hydratation und eine optimale Belüftung des Bodens für die Aktivität der Bakterien zu gewährleisten.

5. Verfahren, gemäß Patentanspruch 1, das durch die Tatsache charakterisiert wird, dass das Granulat, durch das das Abwasser sickert, eine **zunehmende Größe von** 0-2 mm **oben bis** 16-32 mm **unten** aufweist, deren Zusammensetzung und Größe veränderbar je nach zu behandelndem Abwasser und geforderten Merkmalen des Auswurfs ist.

6. Verfahren, gemäß den Patentansprüchen 1-2-3-4-5, das durch die Tatsache charakterisiert wird, dass die neue Kombination auf Grund ihrer Effizienz **nur einen Quadratmeter** Nutzfläche pro Einwohnerwert benötigt, um normales Stadtabwässer zu reinigen.

7. Verfahren, gemäß Patentanspruch 1 und 4, das dadurch charakterisiert wird, dass eine momentane Stilllegung der Anlage aus Wartungs- oder Unfallgründen durch die abwechselnde Inbetriebnahme der halben Becken vermieden wird.

8. Verfahren, gemäß Patentanspruch 1 und 3, das durch die Tatsache charakterisiert wird, dass das Abwasser **in Schüben durch eine Bewässerungsvorrichtung** auf der ganzen Fläche des Beckens **verteilt** wird, das in Betrieb ist.
